# EUROPEAN PATENT APPLICATION

(11) **EP 4 559 650 A1**
(43) Date of publication of application: **28.05.2025**
(21) Application number: 23842497.2
(22) Date of filing: 20.07.2023
(51) Int. Cl.: B28B 11/16, B28B 15/00, B28B 11/10, B28B 3/26

(54) **METHOD AND DEVICE FOR THE PRODUCTION OF CERAMIC PIECES**

(30) Priority: 21.07.2022 ES 202230677
(71) Applicant: Exagres, S.A., 12549 Betxi (ES)
(72) Inventor: MALLOL GASCH, Luis, 12110 L'Alcora (ES); PERIS COLÓN, Jorge, 12560 Benicasim (ES)
(74) Representative: Soler Lerma, Santiago
(86) International application number: PCT/ES2023/070475
(87) International publication number: WO 2024/018111

(57) **Abstract**

Method and device for the manufacture of pieces of sanitary material, especially shower trays combining extrusion, a pressing and a transition. The method comprises a first stage of extrusion in which the longitudinal lines of the piece are defined, a second stage of transport, adaptation of the speed and positioning of the piece, a third stage of pressing the block at a humidity of 18% to 20% and a fourth stage of drying after the exit of the press until the piece reaches a humidity below 1%.

## Description

The invention, as its name indicates, refers to a method and a device for the manufacture of ceramic parts, especially, but not solely, sanitary parts such as shower trays or sinks.

With this invention, it is sought to be able to automatically make sanitary parts in ceramic material, especially in porcelain stoneware, being able to be customised in size in a simple way without the need for a mould for each dimension.

The use of this material for the manufacture of shower trays has an excellent performance with respect to parameters as relevant to the target application as water evacuation capacity, resistance to chemicals and cleaning agents, surface stability and resistance to temperature variations, among others, which makes it ideal not only for the manufacture of parts for use indoors but also outdoors, however, the requirements of molds for each required dimension is a high investment

The invention that is planned combines extrusion and pressing techniques, thus allowing the control and automation of the method as well as obtaining a material of the highest quality and shapes that cannot be obtained by conventional techniques as well as versatility in terms of dimensions at a low cost.

The technical field to which it belongs is the refrigeration systems for transport vehicles.

### BACKGROUND OF THE INVENTION

Traditionally, shower trays have been manufactured using sanitary porcelain, but due to a series of drawbacks (cold to the touch, slippery or that cannot be made to measure, among others), little by little this material has been replaced by others, such as acrylic shower trays (made with fibres and reinforced on the inside) that presented some advantages over the previous ones (warmer, less slippery, lighter...) but that still present some drawbacks (standard measures, feeling of fragility, loss of tone with the passage of time...)

Resin shower trays are one of the latest types to hit the market. They are manufactured from a mass of approximately 70% marble and resins and the remaining 30% from other materials. Various materials are used for the surface of these shower trays, such as lacquers, epoxy or polyurethane paints, etc. Among the advantages of these products we can highlight: they are made to measure, they are more non-slip, they are warm to the touch, they can be repaired, there is a great variety of finishes.

Within this type of materials, it is also worth highlighting the appearance of solid-surface shower trays on the market. This is a material composed of natural minerals (ATH: Alumina Trihydrate) and a low percentage of high-strength resins that gives these products improved characteristics compared to those of conventional resins: greater warmth to the touch, lack of pores, antibacterials, manufactured without additives, greater hardness, resistance and durability.

Finally, and more recently, we have seen some companies in the ceramic tile sector launch ceramic shower trays on the market. Depending on the type of company and its specialisation, very different products are offered, from systems formed from large format and thick porcelain stoneware tiles to systems with plastic sub-bases on which a conventional porcelain stoneware is installed.

However, none of the ceramic products that are currently marketed as shower trays are manufactured following an extrusion method due to the limitations of this method, manufacturing by nozzle.

However, precisely because of the characteristics of the manufacturing method, especially due to the matrix through which the plastic ceramic material is passed, it allows to obtain ceramic products with unique characteristics, which can be used for the design of this type of products.

Thus, compared to other products on the market (resins, solid-surface, natural stone, ceramics, etc.), the development of an extruded ceramic shower tray would allow:
- Solve mechanical resistance problems in weakened areas (siphon recesses or similar) offered by other materials or production methods.
- Improve the performance of the material against thermal shock compared to resin shower trays.
- Solve deformation problems during the handling and storage of the product on site.
- Increase strength, durability and healthiness as it is a product with minimal porosity.
- Incorporate the possibility of integrating a hidden water evacuation system (not all products currently allow it).
- Offer a product completely free of VOC emissions and with declared environmental impacts.
- Improve the design and integration with the rest of the cladding of the room through digital print decoration, which would allow to solve the transition with pavement and cladding.
- Improve the formal design of the product, compared to the rest of the ceramic shower trays, due to the possibilities offered by the manufacturing system that is intended to be followed.
- Versatility in terms of the final dimensions of the plate.

Extrusion allows rectangular pieces of a thickness of several centimetres to be obtained, which allows, at a later time, through the pressing phase, to provide the upper face with a sufficient inclination to guarantee drainage to, at a later time, cut the piece to the required dimension without damaging the inclination that remains constant. The leftover is reused again in the extruder.

If only the pressing phase is used, the maximum thicknesses advisable to guarantee the pressing in this type of material do not exceed 2 centimetres, so it is not possible to make a large piece with a sufficient inclination that runs through it in its entirety and guarantees correct drainage.

On the other hand, if extrusion is used exclusively, certain shapes that require pressing would not be possible.

A method comprising an extrusion step and a pressing step allows the realization of parts with a series of characteristics that would not be possible with the mere press or extrusion among which stand out;
- Obtain the necessary slopes on the plate for the correct evacuation of the water, thus avoiding sections that are too horizontal.
- Optimize the reliefs and/or surface textures that allow it to achieve the comfort and degree of adhesion required for this type of environment.
- Increase the section of the part and with it the mechanical resistance of the shower tray, a particularly valuable feature for shower trays installed outdoors where the mechanical demands are greater.
- Solve the encounter with vertical walls or even with the pavement, thus avoiding joints in critical locations and their consequent leakage problems.
- Obtain a dry installation system that would allow the evacuation of water through the joints.
- Obtain a part that allows it to be adjusted in size after pressing while maintaining sufficient slopes for drainage.

Another objective of the invention is to reduce manual interventions on the part, avoiding work accidents as well as human errors that can generate defects in the parts that make them useless, with the consequent increase in waste.

There is no known method for the manufacture of sanitary parts that combines an extrusion stage, a transition stage and a pressing stage on the same part.

### DESCRIPTION OF THE INVENTION

The invention relates to a method and a device for the manufacture of sanitaryware dishes, especially shower trays, through a method that combines an extrusion, a pressing and a transition that makes it possible to combine both methods.

The procedure includes, in addition to the steps of preparation of the material that are obviated herein, the following:
A first stage of extrusion of the part, where the longitudinal lines of the same are defined. In this extrusion step, the pressure of the extrusion is coordinated with the force of the subsequent press, so that the pressure in the extrusion can be reduced with the consequent energy saving, since in the subsequent pressing step the appropriate pressure can be applied to the part for compaction.

From this first extrusion step, a wet and continuous piece is obtained that is cut by conventional methods into different blocks. We will call the already extruded and cut piece that goes to the press a taco.

A second stage of transport, adaptation of the speed and positioning of the block. In this step, the block is transported from the extruder to the press. In a preferred embodiment, the transport is carried out by means of one or more conveyor belts, although other transport systems are not ruled out. In the path between the extruder and the press, the following is carried out:
- Adjust the speed of the block to the working speed of the press, which in a preferred embodiment is carried out automatically through the conveyor belt.
- Position the block so that, upon arrival at the press, its location is exact. For this purpose, the following are coordinated:
   ∘ a photocell that detects the block before the press
   ∘ an encoder on the stepper motor that reads the advance of the conveyor belt to adjust the stop of the same right in the pressing position.

At this stage of transport, manual machining may occur if necessary for any part of the part. This machining could also occur after pressing, although at that time, as the part was more compacted, it would be a more difficult task.

A third stage of pressing the block. At this stage:
- It is carried out with the wet block with a value range of 18% to 20%, unlike the pressing of the ceramic industry, which is with values of 3-4%. This pressing with this degree of humidity allows the extrusion part to be used without the need for a previous drying phase.
- An already formed block is pressed by extrusion, unlike the pressing systems of the ceramic industry where atomized earth is pressed.

After extrusion and with the piece handling this humidity range, said piece is deformed with the press when it is pressed, the slope that the piece will be established, which determines the inclination and consequently the orientation of the water towards the drain.

In a possible non-limiting execution, for the purposes of this manufacturing method, a percentage of inclination of the slope of between 1.5% and 3% is managed.

In a preferred embodiment, the percentage of inclination of the slope is 2%

At this stage, at the same time that the part is pressed, a pre-mark is made that will define the location of the drain so that once the part comes out of cooking, it is machined and with the pre-mark correctly located, the hole that will generate the drain of the part is drilled, preferably with a breaker.

A fourth drying step: after leaving the press, the piece is dried until it reaches a humidity below 1% as a phase prior to enamelling and firing.

A fifth grinding stage where once the piece leaves the cooking phase it passes to a grinding method where a series of grinding elements, which may be grinding wheels, grind the perimeter of the piece according to previously determined values.

In this method, the piece is roughed, preferably between 1mm and 5mm of material throughout its perimeter, this range not being limiting, seeking to calibrate the piece according to said predetermined values by handling a tolerance margin of preferably +/-0.5mm.

Optionally, after pressing or after firing there may be a cutting step in which the piece is cut, longitudinally or transversely to suit the required dimensions. The cross section is made on the side where the slope is. Since said slope is preferably of constant inclination, the evacuation or drainage capacity of the part remains unchanged regardless of the final dimensions.

The method thus explained can be executed on a device comprising;
- A variable and measurable pressure extruder.
- A variable and measurable pressure press.
- A coordination element between the extruder and the press to adapt the pressure of the extruder and the press.
- A cutting element at the exit of the extruder suitable for sectioning the piece and separating it into blocks.
- A suitable transport element for transferring the blocks from the outlet of the extruder to the press. This conveying element comprises;
   ∘ A speed regulator. This speed regulator coordinates the speed at which the blocks access the press to adapt it to the working speed of the press. For this, the working speed of the extruder, the speed of the transport or both can be regulated, all in coordination with the working speed of the press.
   ∘ A dowel locator, suitable for determining the exact position of each dowel on the transport table.
   ∘ A suitable positioner to verify that the position of the block under the press is adequate.
- A press dislodging element suitable for removing the already pressed block from the press.
- Transport elements to drying. As noted, the press is wet, so after passing through the press the already pressed block must be dried to reduce its humidity before moving on to the enamelling, decoration and oven operations.
- Grinding elements arranged after drying
- Optionally cutting elements arranged after the press

### BRIEF DESCRIPTION OF THE FIGURES

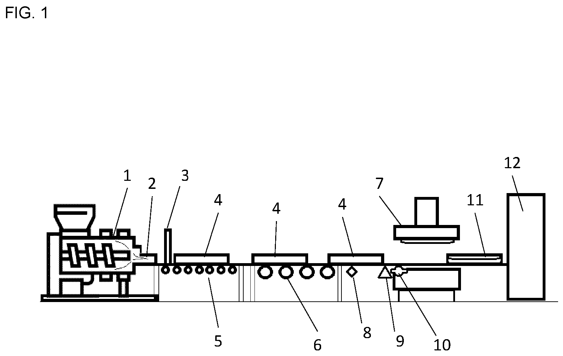

FIGURE 1 shows schematically the device that allows the procedure to be applied for the manufacture of ceramic pieces and thus we find:
An extruder (1) that provides the linear piece (2) of ceramic.
A cutter (3) that sections the piece in line at the exit of the extruder forming the initial blocks (4).
The initial blocks (4) are first advanced by a transport table (5) that leads them to a transition table (6) where the speed of the blocks is regulated to adapt it to the working speed of a press (7) and they are positioned.
For the regulation of the speed and positioning of each block, a series of photoelectric cells (8), at least one Encoder (9) and a stepper motor (10) are involved.
Once pressed, the final block (11) passes to a drying station (12) to reduce its humidity and then proceed with its ornamentation, enamelling and firing.

### DESCRIPTION OF AN EMBODIMENT

An embodiment of the invention is described here that is not limiting but merely explanatory.

Method and device for the manufacture of shower trays by means of an extruded and pressed method.

The procedure comprises the following phases:
A first stage of extrusion of the ceramic piece (2) where the longitudinal lines of said piece are defined. In this first stage, prior to the start, the extrudate pressure and the pressing force are coordinated in such a way that at a higher pressure in the extruder, less pressure will be needed in the press since the compaction of the part will be greater from the extrusion. However, if the press must make deep alterations to the block, it will require less effort from the press if the block arrives with a lower degree of compaction. The coordination of pressures between the extruder and the press will depend on the type of part, the type of material and the conditions of the material. This coordination of pressures allows significant cost savings by limiting the effort of each of the aforementioned elements.

From this stage a wet (between 18% and 20% humidity) and continuous ceramic part (2) is obtained for each die of the extruder. This continuous piece is then cut by conventional means, in a sub-cutting step, in which the initial blocks (4) are formed.

A second transport stage where through a transport table (5) the initial block is taken to a transition table (6) where the speed and positioning of the initial block (4) is calibrated. The transport table (5) takes the block from the extruder to the transition table, and the transition table (6), in addition to regulating the speed and position of the initial block, takes it to the press (7). During the journey between the extruder (1) and the press (7) the following is carried out:
- The synchronization of the speed of the block (4) with the working speed of the press (7) through the automated method of the conveyor belt.
- The exact positioning of the block (4) is determined where the data obtained from:
   ∘ A photocell that detects a block (4) in a pre-press position (7).
   ∘ An Encoder (9) on the motor (10) that detects the advancement of the conveyor belt allowing to adjust the stop of said belt in the pressing position depending on the location of the block (4).

Optionally, this second step may comprise a machining substep to carry out the modifications of the part that will not be made in the pressing.

A third stage of pressing the block (4) where in this stage:
- The plug (4) has a percentage of humidity between 18% and 20% which allows the piece from the extrusion method to be used without having to resort to a previous drying phase.
- A block (4) formed by extrusion is pressed.

In this stage, the slope that the piece will have towards the drain is established where, thanks to the percentage of humidity that the piece maintains, a slope inclination of 2% is obtained.

At the same time, a pre-mark is established that defines the location of the drain on the surface of the part which, after the cooking method, will be perforated by a breaking element (not shown).

A fourth drying stage where the final block (11), after leaving the press (7), is dried to a humidity below 1%, being the phase prior to enamelling and firing.

A fifth grinding stage where a series of grinding wheels grind the perimeter of the final block (11) between 1mm and 5mm, based on previously established standard values, where a tolerance margin of +/-0.5mm is established.

Optionally a step of longitudinal and/or transverse cutting. If there is a cross-section, it is made on the side of the slope, not on the side of the drain.

The device for executing said method comprises:
- A variable and measurable pressure extruder (1).
- A variable and measurable pressure press (7).
- A coordination element between the extruder (1) and the press (7) that adapts the pressure of both the extruder (1) and the press (7) by combining with each other.
- A cutter (3) at the outlet of the extruder (1) that sections the ceramic piece (2) into initial blocks (4).
- A transport element that transfers the initial blocks (4) from the outlet of the extruder (1) to the press (7) where this transport element comprises:
   ∘ A transport table (5) suitable for carrying the starting blocks from the cutter (3) to the transition table.
   ∘ A transition table (6) suitable for carrying the initial blocks from the transport table to the press (7), where this transition table regulates the speed of arrival of the initial blocks (4) to the press (7) according to their working speed.
   ∘ Photoelectric cells (8) or pin locator that determines the exact position of each initial pin (4).
   ∘ An Encoder (9) or positioner on the stepper motor (10) that positions the initial block (4) under the press (7).
- A press dislodging element (7) that removes the already pressed end block (11) from the press.
- A drying station (12) where the humidity of the final block (11) is lowered before moving on to the enamelling, decorating and oven operations typical of the ceramic industry.
- A roughing element arranged after drying (not shown).
- Optionally a second cutting element arranged after the press (not shown).

## Claims

1. METHOD FOR THE MANUFACTURE OF CERAMIC PIECES **characterised in that** it comprises
A first stage of extrusion of the piece, where, prior to starting the extrusion, the pressure with which the extruder (1) acts is coordinated with the pressure with which a press (7) will act in a subsequent pressing stage. In the extrusion, the longitudinal lines of the piece are defined. The percentage of humidity of the piece as it leaves the extruder is between 18% and 20%. This first step comprises a substep of cutting in which the piece obtained from the extruder is cut in a cutting machine (2) by conventional methods, obtaining an initial block (4).
A second stage of transport and synchronization of the initial block. At this stage the initial block is carried by a transport table (5) from the cutter (3) to the transition table. At the transition table, the speed of travel of the initial block is synchronized with the working speed of the press (7). The initial block is also positioned in a suitable way for pressing. For this purpose, the transition table has position detectors and speed regulators.
A third pressing stage where the initial block (4) with the percentage of humidity with which it comes from the first stage, between 18% and 20%, is positioned in a press (7) and is pressed. The pressing force exerted by the press on the block is coordinated with the pressure with which the extruder acts. In this phase, the non-longitudinal lines of the initial block are shaped and thus a final block (11) is formed.
In this stage, the slope of the drainage that will have the final block is also determined and, in parallel, a pre-mark is made on the block that determines the location of said drainage for its subsequent rupture and perforation.
A fourth drying step, subsequent to the pressing step, in which the percentage of humidity of the final plug is reduced to a percentage of less than 1%.
A fifth stage of grinding where a series of roughing elements rough the perimeter of the end block (11) according to predetermined values.

2. METHOD FOR THE MANUFACTURE OF CERAMIC PIECES according to claim 1 **characterised in that** the second stage of transport comprises a sub-step of machining in which modifications of the piece are carried out other than those to be carried out by the press.

3. METHOD FOR THE MANUFACTURE OF CERAMIC PIECES according to claim 1 **characterised in that** during the transport stage the position of the initial block is detected and corrected for its correct positioning in the press.

4. METHOD FOR THE MANUFACTURE OF CERAMIC PIECES according to claim 1 **characterised in that** during the transport stage the speed of the initial block is detected and corrected for its correct synchronisation with the press.

5. METHOD FOR THE MANUFACTURE OF CERAMIC PIECES according to claim 1 **characterised in that** the initial block is positioned in the press driven by a stepper motor.

6. METHOD FOR THE MANUFACTURE OF CERAMIC PIECES according to claim 1 **characterised in that** in the pressing step a slope is established with a percentage of inclination of between 1.5% and 3%

7. METHOD FOR THE MANUFACTURE OF CERAMIC PIECES according to claim 6 **characterized in that** in the pressing stage a slope is established with a percentage of inclination of 2%

8. METHOD FOR the MANUFACTURE OF CERAMIC PIECES according to claim 1 **characterized in that** in the fifth stage the final block is roughed, between 1mm and 5mm handling a tolerance margin of +/- 0.5mm.

9. METHOD FOR THE MANUFACTURE OF CERAMIC PIECES according to claim 1 **characterised in that**, after the pressing step, it also includes a longitudinal, transverse or both cutting step of the piece.

10. METHOD FOR THE MANUFACTURE OF CERAMIC PIECES according to claim 9 **characterised in that** the transverse cut is produced by the part where the slope is located.

11. METHOD FOR THE MANUFACTURE OF CERAMIC PIECES according to claim 1 **characterised in that** the slope is of constant inclination.

12. DEVICE FOR THE MANUFACTURE OF CERAMIC PIECES **characterized in that** it comprises:
- A variable and measurable pressure extruder (1).
- A variable and measurable pressure press (7).
- A cutter (3) at the outlet of the extruder (1) that sections the ceramic piece (2) into initial blocks (4).
- A transport element that transfers the initial blocks (4) from the outlet of the extruder (1) to the press (7) where this transport element comprises:
∘ A transport table (5) suitable for carrying the starting blocks from the cutter (3) to the transition table.
∘ A transition table (6) suitable for carrying the initial blocks from the transport table to the press (7), where this transition table regulates the speed of arrival of the initial blocks (4) to the press (7) according to their working speed.

13. DEVICE FOR THE MANUFACTURE OF CERAMIC PIECES according to claim 12, **characterized in that** it comprises a coordination element between the extruder (1) and the press (7) that coordinates the pressure of the extruder (1) and the press (7).

14. DEVICE FOR THE MANUFACTURE OF CERAMIC PIECES according to claim 12 **characterized in that** the transport element comprises photoelectric cells (8) suitable for determining the exact position of each initial block (4) and an encoder (9) linked to a stepper motor (10) that positions the initial block (4) under the press (7).

15. DEVICE FOR THE MANUFACTURE OF CERAMIC PIECES according to claim 12 **characterized in that** it also comprises a drying station (12) where the humidity of the final block (11) is lowered before moving on to the glazing, decoration and oven operations typical of the ceramic industry.

16. DEVICE FOR THE MANUFACTURE OF CERAMIC PIECES according to claim 12 **characterized in that** it also comprises a cutting element arranged after the press.

17. DEVICE FOR THE MANUFACTURE OF CERAMIC PIECES according to claim 12 **characterized in that** it also comprises a roughing element arranged after drying.

18. DEVICE FOR THE MANUFACTURE OF CERAMIC PIECES according to claim 12 **characterized in that** it also comprises a breaking element of the pre-brand made for the drain.
